# EUROPÄISCHE PATENTSCHRIFT

(11) **EP 3 584 114 B1**
(45) Veröffentlichungstag und Bekanntmachung des Hinweises auf die Patenterteilung: **02.03.2022**
(21) Anmeldenummer: 18178780.5
(22) Anmeldetag: 20.06.2018
(51) Int. Cl.: B60P 3/40

(54) **NACHLÄUFERFAHRZEUG FÜR DEN TRANSPORT EINES WINDENERGIEANLAGENROTORBLATTS, VERSCHIEBEVORRICHTUNG FÜR EIN NACHLÄUFERFAHRZEUG, TRANSPORTFAHRZEUG SOWIE VERFAHREN**
FOLLOWING VEHICLE FOR TRANSPORTING A WIND ENERGY ASSEMBLY ROTOR BLADE, DISPLACEMENT DEVICE FOR A FOLLOWING VEHICLE, TRANSPORT VEHICLE AND METHOD
VÉHICULE REMORQUE POUR LE TRANSPORT D'UNE PALE DE ROTOR D'UNE ÉOLIENNE, DISPOSITIF DE DÉPLACEMENT POUR UN VÉHICULE REMORQUE, VÉHICULE DE TRANSPORT AINSI QUE PROCÉDÉ

(43) Veröffentlichungstag der Anmeldung: 25.12.2019
(73) Patentinhaber: Nordex Energy SE & Co. KG, 22419 Hamburg (DE); Rostock-Trans GmbH, 18146 Rostock (DE)
(72) Erfinder: Hennek, Laars, 18146 Rostock (DE)
(74) Vertreter: Epping - Hermann - Fischer

(56) Entgegenhaltungen:
- EP-B1- 2 105 349
- US-A1- 2016 017 861
- US-A1- 2016 201 644
- US-A1- 2016 221 488
- US-B1- 9 790 927

## Beschreibung

Die Erfindung betrifft ein Nachläuferfahrzeug für den Transport eines Windenergieanlagenrotorblatts. Das Nachläuferfahrzeug weist ein Fahrwerk mit zumindest zwei Achsen zum Rollen auf einem Untergrund sowie ein fest an dem Fahrwerk angeordnetes Drehlager auf. Ein Trägergestell zum Anbringen an ein Windenergieanlagenrotorblatt und zum Abstützen dessen ist mit dem Drehlager gekoppelt, sodass das Trägergestell gegenüber dem Fahrwerk verdrehbar ist. Die Erfindung betrifft darüber hinaus eine Verschiebevorrichtung für ein solches Nachläuferfahrzeug, ein Transportfahrzeug sowie ein Verfahren zum Einstellen eines Überhangs eines mit einem Transportfahrzeug transportierten Windenergieanlagenrotorblatts.

Nachläuferfahrzeuge als Teil eines Transportfahrzeugs, insbesondere eines Schwerlast-Transportfahrzeugs, zum Transport eines Windenergieanlagenrotorblatts sind aus dem Stand der Technik bekannt (siehe beispielsweise die EP 2105349 B1). Derartige Transportfahrzeuge haben eine angetriebene Zugmaschine, die mit dem Transportgut, dem Windenergieanlagenrotorblatt, fest gekoppelt ist. Zusätzlich ist das Windenergieanlagenrotorblatt in einem hinteren Bereich bezogen auf die Gesamtlänge an einem Nachläuferfahrzeug abgestützt. Nachläuferfahrzeuge haben in der Regel zwei oder mehrere Achsen sowie ein Drehlager, sodass ein Trägergestell zum Abstützen des Windenergieanlagenrotorblatts um eine Hochachse drehbar ist. Dies ermöglicht Kurvenfahrten für das Transportfahrzeug.

US 2016/0201644 A1 bezieht sich auf ein System und ein Methode Verfahren zur sicheren und praktischen Lagerung und zum Transport von Windturbinenblättern mit riesigen Abmessungen, wobei eine Spannvorrichtung offenbart wird.

US 9 790 927 B1 bezieht sich auf Systeme und Verfahren zum Transport von länglichen Objekten, einschließlich Windturbinenblättern, deren Länge die Verwendung von mehreren miteinander gekoppelten Triebwagen und die Verwendung von speziellen Vorrichtungen zur Kontrolle des Lastausgleichs und des Eisenbahnabstands bei Lastüberhängen erfordert.

US 2016/017861 A1 bezieht sich auf Systeme und Verfahren zum Transport von Windturbinenblättern auf der Schiene.

Eine Aufgabe, die der Erfindung zugrunde liegt, ist es, ein Konzept für ein Nachläuferfahrzeug anzugeben, welches dazu beiträgt, dass eine Manövrierfähigkeit und Wendigkeit eines Transportfahrzeugs verbessert wird.

Gemäß einem ersten Aspekt wird ein gattungsgemäßes Nachläuferfahrzeug offenbart, welches dadurch gekennzeichnet ist, dass das Trägergestell relativ zu dem Drehlager entlang einer vorbestimmten Richtung, nämlich der Rotorblattlängsrichtung des Windenergieanlagenrotorblatts, verschiebbar ausgebildet ist. Hierzu ist das Trägergestell mittels einer Verschiebevorrichtung mit dem Drehlager gekoppelt, die derart ausgebildet ist, dass das Trägergestell relativ zu dem Drehlager verschiebbar ist. Die Verschiebevorrichtung weist eine Verschiebeplattform auf, die mit dem Trägergestell mechanisch verbunden und die verschiebbar an dem Drehlager angeordnet ist. Die Verschiebevorrichtung weist eine Lagerkomponente auf, die fest mit dem Drehlager verbunden ist, wobei die Verschiebeplattform verschiebbar an der Lagerkomponente geführt ist.

Erfindungsgemäß ist vorgesehen, dass das Trägergestell derart mit dem Drehlager gekoppelt ist, dass dieses relativ zu dem Drehlager, und damit relativ zu dem Fahrwerk, entlang der vorbestimmten Richtung verschoben werden kann. Entlang der vorbestimmten Richtung bedeutet, dass das Trägergestell in zwei Richtungen, etwa vor und zurück, entlang der vorbestimmten Richtung bewegt werden kann. Insbesondere erfolgt das Verschieben entlang einer Rotorblattlängsrichtung in einem bestimmungsgemäßen Betrieb des Nachläuferfahrzeugs beim Transport. Mit anderen Worten ausgedrückt erfolgt das Verschieben in einer Horizontalen bezüglich des Untergrunds, auf dem das Nachläuferfahrzeug rollt. Beispielsweise ist das Trägergestell im Wesentlichen parallel zu einer durch die Achsen des Nachläuferfahrzeugs aufgespannten Ebene verschiebbar. Die vorbestimmte Richtung kann auch als Verschiebeachse bezeichnet werden. Durch diese Maßnahme kann einerseits die Länge zwischen Zugfahrzeug und Nachläuferfahrzeug in einem betriebsgemäßen Zustand, das heißt bei einem Transport eines Windenergieanlagenrotorblatts, und gleichermaßen auch der Überhang des Rotorblatts nach hinten, das heißt in einer Richtung weg von der Zugmaschine und dem Nachläuferfahrzeug, eingestellt werden. Mit anderen Worten ermöglicht das beschriebene Nachläuferfahrzeug den Überhang eines transportierten Windenergieanlagenrotorblatts bezüglich des Nachläuferfahrzeugs zu verändern.

Typischerweise ist ein Windenergieanlagenrotorblatt derart am Nachläuferfahrzeug gelagert, dass ein Überhang von zirka 10 m nach hinten vorhanden ist. Ein Überhang ist grundsätzlich notwendig, da für den Transport das Rotorblatt blattwurzelseitig an der Zugmaschine befestigt ist und blattspitzenseitig am Nachläuferfahrzeug. Im blattspitzenseitigen Endbereich des Rotorblatts ist aufgrund der dünneren Ausgestaltung sowie der insgesamt sehr hohen Gesamtlänge eines Rotorblatts eine entsprechende Lagerung mit Überhang nötig, damit das Rotorblatt beim Transport nicht zu stark durchbiegt, was im schlimmsten Falle zu einer Beschädigung des Rotorblatts führen könnte. Aufgrund des notwendigen Überhangs gestalten sich Kurvenfahrten je nach Straßenführung und Gegebenheiten unterschiedlich schwierig. Ein- und ausfahrbare Teleskopträger, welche die Zugmaschine mechanisch mit dem Nachläuferfahrzeug verbinden und das Transportgut zusätzlich stützen, sind ab einer Rotorblattlänge über 65 m in der Regel nicht zulässig.

Erfindungsgemäß ist nun vorgesehen, den Überhang einzustellen, indem das Trägergestell selbst verschiebbar mit dem Fahrwerk gekoppelt ist. Je nach Kurvenfahrt und somit Umgebungsbedingungen können die Länge zwischen Zugmaschine und Nachläuferfahrzeug beziehungsweise der Überhang entsprechend verkürzt oder verlängert werden. Dadurch wird erheblich zu einer besseren Manövrierfähigkeit und Wendigkeit eines solchen Schwerlast-Transportfahrzeugs beigetragen.

Hier und im Folgenden gilt, dass der Überhang im Kontext der vorliegenden Offenbarung von einem blattspitzenseitigen Ende des Rotorblatts zu dem Drehlager, insbesondere einer Drehachse des Drehlagers, definiert ist. Eine Länge zwischen Zugmaschine und Nachläuferfahrzeug soll hier und im Folgenden zwischen einem hinteren Ende der Zugmaschine sowie dem Drehlager, insbesondere wiederum der Drehachse, definiert sein. Alternativ ist auch denkbar den Überhang statt des Drehlagers anhand der hintersten Achse des Nachläuferfahrzeugs und die Länge zwischen Zugmaschine und Nachläuferfahrzeug anhand der vordersten jeweils in einem betriebsgemäßen Zustand beim Transport zu definieren.

Mit dem erfindungsgemäßen Nachläuferfahrzeug sind somit Normalfahrten möglich, bei denen der Überhang im Vergleich zu bisherigen Nachläuferwagen gleich ist. Es lassen sich aber auch lange beziehungsweise kurze Rangierfahrten durchführen, bei denen der Überhang entweder kürzer (Rangierfahrt - lang) oder länger (Rangierfahrt - kurz) ist.

Das Drehlager ist fest mit dem Fahrwerk, insbesondere einem Fahrgestell des Fahrwerks, gekoppelt und ist beispielsweise mittig zwischen den zwei oder mehreren Achsen des Fahrwerks angeordnet. Das Drehlager ist beispielsweise ein Dreh-/Wipplager. Das Drehlager ist beispielsweise ein Betonschemel.

Wie bereits erwähnt, bedeutet das Verschieben bezüglich des Drehlagers demnach ein Verschieben bezüglich des Fahrwerks. Unter dem Fahrwerk wird die Gesamtheit der Teile des Nachläuferfahrzeugs verstanden, die der Verbindung eines Fahrgestells über die Achsen und Räder zu einem Untergrund, insbesondere einer Fahrbahn, dienen. Das Trägergestell kann auch als Trägeranordnung bezeichnet werden und ist ausgebildet, mit dem blattspitzenseitigen Endbereich eines Windenergieanlagenrotorblatts gekoppelt zu werden und dieses beim Transport abzustützen. Das Trägergestell ist beispielsweise aus mehreren Trägerprofilen zusammengesetzt. Das Trägergestell umfasst sämtliche mechanischen Komponenten, die fest mit dem Drehlager verbunden sind. Das Trägergestell kann alternativ auch über eine weitere Komponente, etwa über ein zusätzliches Lagergestell, mit dem Drehlager verbunden sein. Das Trägergestell ist derart mit dem Drehlager gekoppelt, dass das Trägergestell relativ zum Drehlager verschoben werden kann. Die Kopplung mit dem Drehlager kann verschiedene Ausführungsformen aufweisen. Hierfür bieten sich beispielsweise eine Schlittenführung, eine Kulissenführung oder andere mechanische Führungen an.

Als Nachläuferfahrzeug wird insbesondere im Transportwesen, insbesondere im Langmaterialtransport, ein Fahrzeuganhänger verstanden, der nur durch die Ladung mit dem Zugfahrzeug verbunden ist und über keinen eigenen Antrieb verfügt. Ein solches Nachläuferfahrzeug wird von einer Zugmaschine mittelbar über ein Transportgut gezogen. Das Transportgut verbindet das Nachläuferfahrzeug und die Zugmaschine mechanisch und überträgt die Kräfte auf das Nachläuferfahrzeug. Mit anderen Worten handelt es sich bei dem Nachläuferfahrzeug um ein Mitrollfahrzeug. Typischerweise hat das Nachläuferfahrzeug lediglich Starrachsen.

Das Trägergestell ist mittels einer Verschiebevorrichtung mit dem Drehlager gekoppelt, die derart ausgebildet ist, dass das Trägergestell relativ zu dem Drehlager verschiebbar ist. Bei dieser Ausführungsform ist das Trägergestell somit mittelbar verschiebbar an dem Drehlager gelagert. Die Verschiebevorrichtung koppelt somit das Trägergestell mechanisch mit dem Drehlager und ermöglicht die Verschiebefunktionalität.

Die Verschiebevorrichtung weist eine Verschiebeplattform auf, die mit dem Trägergestell mechanisch verbunden ist und die verschiebbar an dem Drehlager angeordnet ist. Insbesondere ist die Verschiebeplattform fest mit dem Trägergestell verbunden und bildet eine mechanische Baueinheit. Die Verschiebeplattform kann auch als Verschieberahmen, Verschiebetisch, Verschiebeschlitten oder Lastaufnahmerahmen bezeichnet werden.

Die Verschiebevorrichtung weist eine Lagerkomponente auf, die fest mit dem Drehlager verbunden ist, wobei die Verschiebeplattform verschiebbar an der Lagerkomponente geführt ist. Die Verschiebevorrichtung ist somit durch zwei mechanische Einheiten gebildet, die miteinander mechanisch verschiebbar verbunden sind. Es bieten sich die oben genannten Verschiebemechanismen an.

Gemäß einer Ausführungsform ist das Trägergestell an dem Drehlager verschiebbar gelagert. Es handelt sich beispielsweise um eine unmittelbare Lagerung des Trägergestells am Drehlager. Beispielsweise weist das Trägergestell ein oder mehrere Führungselemente auf, die verschiebbar mit entsprechenden Gegenführungselementen des Drehlagers zusammenwirken.

Gemäß einer Ausführungsform ist das Trägergestell zwischen zwei definierten Endstellungen relativ zu dem Drehlager verschiebbar. Mit anderen Worten kann das Trägergestell zwischen einer maximal weit von der Zugmaschine entfernten Stellung und einer maximal nah an der Zugmaschine angeordneten Stellung verschoben werden. Die Endstellungen sind beispielsweise mechanisch durch Anschläge oder Anschlagsvorrichtungen realisierbar. Das Verschieben kann stufenlos oder in vorgegebenen Stufen erfolgen.

Gemäß einer Ausführungsform weist das Nachläuferfahrzeug eine Arretiervorrichtung auf, mittels der das Trägergestell relativ zu dem Drehlager wahlweise arretierbar oder freigebbar ist. Mittels der Arretiervorrichtung kann das Trägergestell relativ zu dem Drehlager während einer Transportfahrt eines Windenergieanlagenrotorblatts arretiert werden, sodass während der Fahrt kein unerwünschtes Verschieben stattfindet. Auf der anderen Seite kann die Arretiervorrichtung gelöst werden, sodass der gewünschte Überhang eingestellt werden kann.

Gemäß einer Ausführungsform weist das Nachläuferfahrzeug eine Bremsvorrichtung zum Blockieren des Fahrwerks des Nachläuferfahrzeugs auf. Mit anderen Worten kann mittels der Bremsvorrichtung ein Rollen des Nachläuferfahrzeugs unterbunden werden. Damit ist es möglich, mittels der Zugmaschine während eines Transportzustands mit aufgeladenem Windenergieanlagenrotorblatt den Überhang einzustellen. Dazu wird beispielsweise das Fahrwerk des Nachläuferfahrzeugs mittels der Bremsvorrichtung blockiert und die Verschiebbarkeit des Trägergestells bezüglich des Drehlagers freigegeben. Mittels der Zugmaschine kann nun das Rotorblatt durch die Kopplung mit dem Trägergestell entlang der vorbestimmten Richtung gezogen oder geschoben werden, sodass sich der Überhang durch Antreiben der Zugmaschine verändert.

Es wird auch eine Verschiebevorrichtung für ein Nachläuferfahrzeug gemäß einer der vorherigen Ausführungsformen offenbart. Die Verschiebevorrichtung weist eine Verschiebeplattform auf, die fest mit dem Trägergestell des Nachläuferfahrzeugs koppelbar ist. Das Trägergestell ist ausgebildet zum Anbringen an ein Windenergieanlagenrotorblatt und zum Abstützen dessen während des Transports. Die Verschiebevorrichtung weist auch eine Lagerkomponente auf, die fest mit einem Drehlager des Nachläuferfahrzeugs koppelbar ist, wobei die Verschiebeplattform relativ zu der Lagerkomponente verschiebbar mit der Lagerkomponente gekoppelt ist.

Die Verschiebevorrichtung ermöglicht im Wesentlichen die vorgenannten Vorteile und Funktionen.

Insbesondere ist die Verschiebevorrichtung als eine separate Baueinheit herstellbar und vertreibbar, sodass herkömmliche Nachläuferwägen mit der Verschiebefunktion auf einfache Art und Weise nachgerüstet werden können. Es ist lediglich das Trägergestell vom Drehlager zu entfernen. Anschließend wird die Verschiebevorrichtung mit dem Drehlager über die Lagerkomponente gekoppelt, während die Verschiebeplattform fest mit dem Trägergestell verbunden wird.

Gemäß einem weiteren Aspekt wird ein Transportfahrzeug für den Transport eines Windenergieanlagenrotorblatts offenbart. Das Transportfahrzeug weist eine Zugmaschine mit einem Antrieb sowie ein Nachläuferfahrzeug gemäß einer der vorherigen Ausführungsformen auf.

Das Transportfahrzeug ermöglicht im Wesentlichen die vorgenannten Vorteile.

Die Zugmaschine weist eine entsprechende Lagerungs- oder Haltevorrichtung auf, sodass ein Windenergieanlagenrotorblatt im Bereich einer Rotorblattwurzel mit der Zugmaschine fest verbunden werden kann. Ein blattspitzenseitiger Bereich des Rotorblattes wird mit dem Nachläuferfahrzeug verbunden, sodass beim Transport das Nachläuferfahrzeug von der Zugmaschine mittels des Rotorblatts gezogen und ins Rollen versetzt werden kann.

Gemäß einem weiteren Aspekt wird ein Verfahren zum Einstellen eines Überhangs eines mit einem Transportfahrzeug gemäß der obigen Ausführung transportierten Windenergieanlagenrotorblatts offenbart. Das Windenergieanlagenrotorblatt koppelt die Zugmaschine und das Nachläuferfahrzeug mechanisch, wie oben bereits beschrieben. Das Verfahren weist die folgenden Schritte auf:
- Blockieren des Fahrwerks des Nachläuferfahrzeugs,
- Freigeben des Trägergestells derart, dass dieses bezüglich des Drehlagers entlang der vorbestimmten Richtung verschiebbar ist,
- Bewegen der Zugmaschine mittels des Antriebs, so dass aufgrund des blockierten Fahrwerks und der mechanischen Kopplung mittels des Windenergieanlagenrotorblatts das Trägergestell entsprechend der Bewegung der Zugmaschine entlang der vorbestimmten Richtung relativ zu dem Drehlager bewegt wird.

Das Verfahren ermöglicht im Wesentlichen die vorgenannten Vorteile und Funktionen.

Weitere Vorteile, Merkmale und Weiterbildungen ergeben sich aus den nachfolgenden, in Verbindung mit den Figuren erläuterten Ausführungsbeispielen. Gleiche, gleichartige oder gleich wirkende Elemente sind in den Figuren mit den gleichen Bezugszeichen versehen. Aus Gründen der Übersichtlichkeit sind gegebenenfalls nicht alle dargestellten Elemente in sämtlichen Figuren mit zugehörigen Bezugszeichen gekennzeichnet.

In den Figuren zeigen:
- Figur 1: eine schematische Darstellung einer Windenergieanlage,
- Figur 2: eine schematische Darstellung eines Transportfahrzeugs beim Transport eines Windenergieanlagenrotorblatts mit einem Nachläuferfahrzeug gemäß einer Ausführungsform der Erfindung,
- Figur 3: eine schematische, perspektivische Darstellung einer Verschiebevorrichtung des Nachläuferfahrzeugs,
- Figur 4: eine schematische Aufsicht auf die Verschiebevorrichtung,
- Figur 5: eine schematische Seitenansicht der Verschiebevorrichtung,
- Figur 6: eine schematische, perspektivische Ansicht der Verschiebevorrichtung mit daran angeordnetem Trägergestell,
- Figuren 7 bis 9: verschiedene Stellungen des Trägergestells des Nachläuferfahrzeugs sowie
- Figur 10: ein schematisches Ablaufdiagramm eines Verfahrens zum Einstellen eines Überhangs eines transportierten Windenergieanlagenrotorblatts.

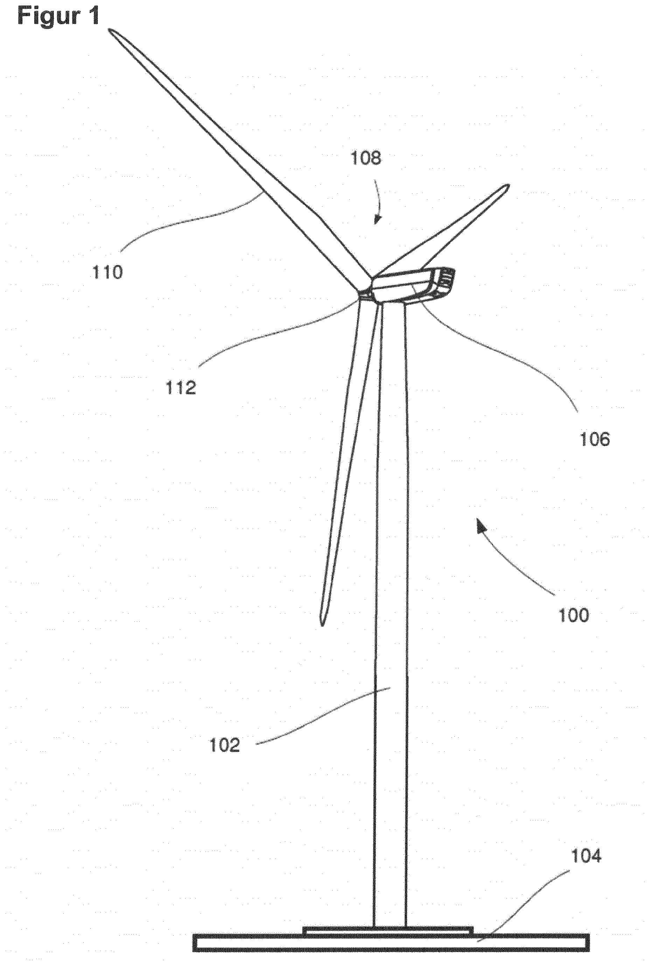

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen-)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

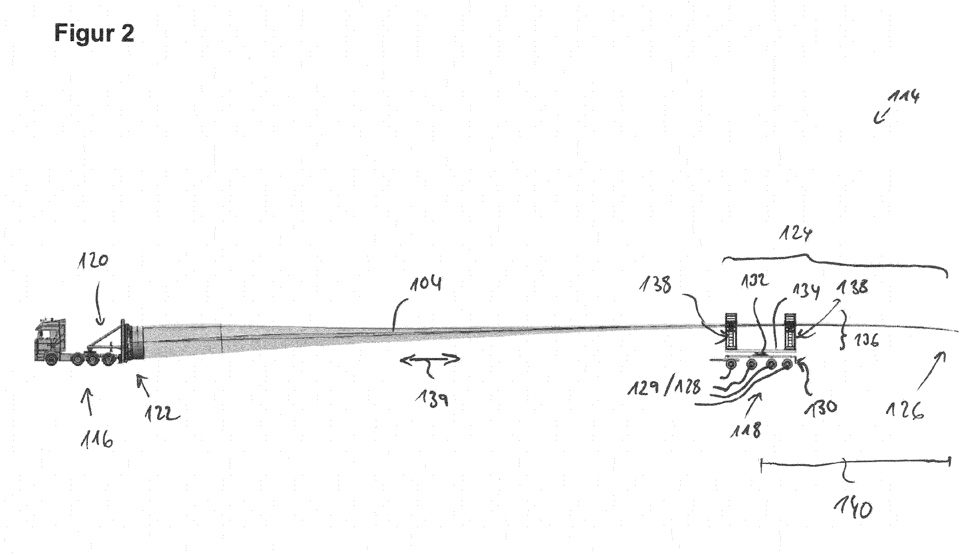

Figur 2 zeigt schematisch ein Transportfahrzeug 114 in einer schematischen Seitenansicht. Bei dem Transportfahrzeug 114 handelt es sich um ein Schwerlast-Transportfahrzeug für den Transport eines Windenergieanlagenrotorblatts 104. Das Transportfahrzeug 114 wird durch eine Zugmaschine 116 und ein Nachläuferfahrzeug 118 gemäß einem Ausführungsbeispiel der Erfindung gebildet. Die Zugmaschine 116 entspricht beispielsweise einer herkömmlichen Lkw-Zugmaschine und weist einen eigenen Antrieb, etwa einen Motor, auf. Die Zugmaschine 116 hat eine Haltevorrichtung 120 zum Festlegen des Rotorblatts 104. Das Rotorblatt 104 wird mit seinem blattwurzelseitigen Ende 122 an der Haltevorrichtung montiert. In einem Endbereich 124 eines blattspitzenseitigen Endes 126 des Rotorblatts, welches dem blattwurzelseitigen Ende 122 gegenüberliegt, ist das Rotorblatt 104 an dem Nachläuferfahrzeug 118 abgestützt. Bei dem Nachläuferfahrzeug 118 handelt es sich um ein Fahrzeug mit vier Achsen 128, welches ohne eigenen Antrieb ausgestattet ist. Dadurch, dass das Rotorblatt 104 fest mechanisch mit dem Nachläuferfahrzeug 118 verbunden ist, wird das Nachläuferfahrzeug durch den Antrieb der Zugmaschine 116 mitgezogen.

Das Nachläuferfahrzeug 118 weist ein Fahrwerk 130 auf, welches ein Fahrgestell mit daran angebrachten Achsen 128 und Rädern 129 umfasst. An dem Fahrwerk 130 ist ein Dreh-/Wipplager 132 (nachfolgend Drehlager 132) fest angeordnet. Das Drehlager 132 ist über eine noch näher zu beschreibende Verschiebevorrichtung 134 fest mit einem Trägergestell 136 verbunden, welches durch zwei Lagergestelle 138 gebildet ist. Die Lagergestelle 138 stellen zwei Aufnahmepunkte oder Lagerungspunkte für das Rotorblatt 104 dar. Das Rotorblatt 104 ist fest mit den Lagergestellen 138 verbunden. Die Lagergestelle 138 können, müssen aber nicht fest direkt miteinander verbunden sein. Im Ausführungsbeispiel sind die Lagergestelle 138 mittelbar über die Verschiebevorrichtung 134 mechanisch verbunden.

Wie anhand von Figur 2 ersichtlich ist, ist typischerweise ein Überhang 140 vorgesehen, der im Folgenden vom blattspitzenseitigen Ende 126 bis zum Drehlager 132 definiert ist.

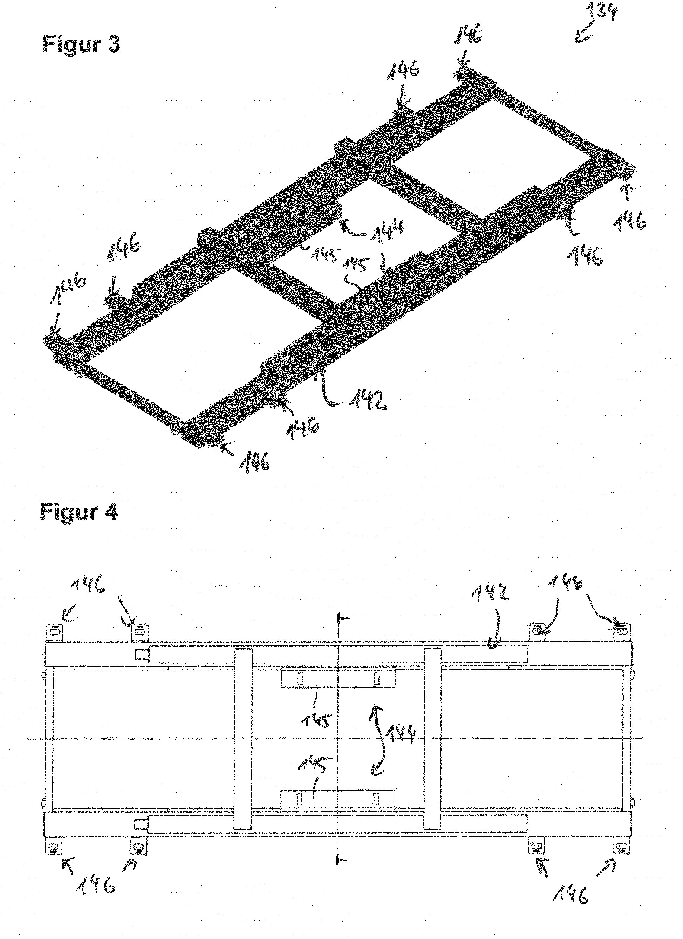

Figuren 3 bis 6 zeigen die Verschiebevorrichtung 134 mit oder ohne Trägergestell 136 isoliert in verschiedenen Ansichten. Die Verschiebevorrichtung 134 ist grundsätzlich so ausgebildet, dass diese das Trägergestell 136 mit dem Drehlager 132 mechanisch koppelt. Die Verschiebevorrichtung 134 ermöglicht, dass das Trägergestell 136, d.h. die beiden Lagergestelle 138, relativ zu dem Drehlager 132 entlang einer vorbestimmten Richtung, insbesondere entlang der Längsrichtung 139 des Rotorblatts 104, verschoben werden kann.

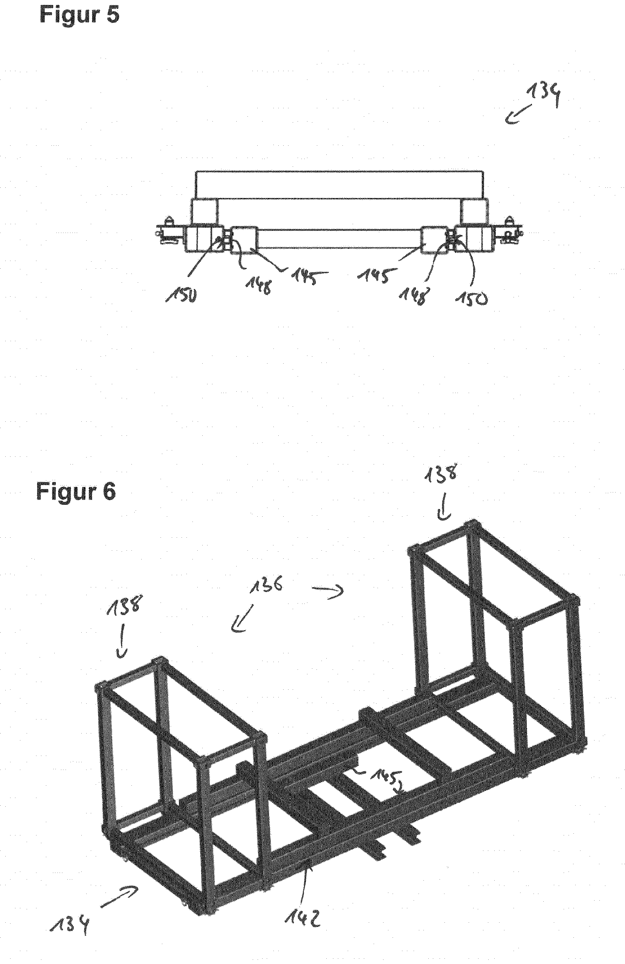

Im Ausführungsbeispiel ist die Verschiebevorrichtung 134 durch zwei mechanische Komponenten, nämlich eine Verschiebeplattform 142 und eine Lagerkomponente 144, gebildet. Die Lagerkomponente 144 umfasst im Ausführungsbeispiel zwei Längsrahmenelemente 145, die fest mit dem Drehlager 132 mechanisch verbunden werden. Die Verschiebeplattform 142 ist verschiebbar an der Lagerkomponente 144, an den Längsrahmenelementen 145, geführt. An gegenüberliegenden Enden der Verschiebeplattform 142 sind jeweils vier Anbindungspunkte 146 vorgesehen, mittels derer das Trägergestell 136 beziehungsweise die Lagergestelle 138 fest mechanisch mit der Verschiebeplattform 142 koppelbar sind. Figur 6 zeigt einen solchen Zustand perspektivisch. Alternativ kann das Trägergestell 136 und die Verschiebeplattform 142 auch als ein einheitliches Trägergestell gesehen werden.

Der Verschiebemechanismus ist im Ausführungsbeispiel durch einen Schlittenmechanismus gebildet, wobei die Lagerkomponente 144 Führungselemente 148 aufweist, welche in korrespondierenden Führungskanälen 150 der Verschiebeplattform 142 verschiebbar geführt sind. Es bieten sich jedoch auch wie eingangs erwähnt verschiedene andere Gleit- oder Verschiebemechanismen an.

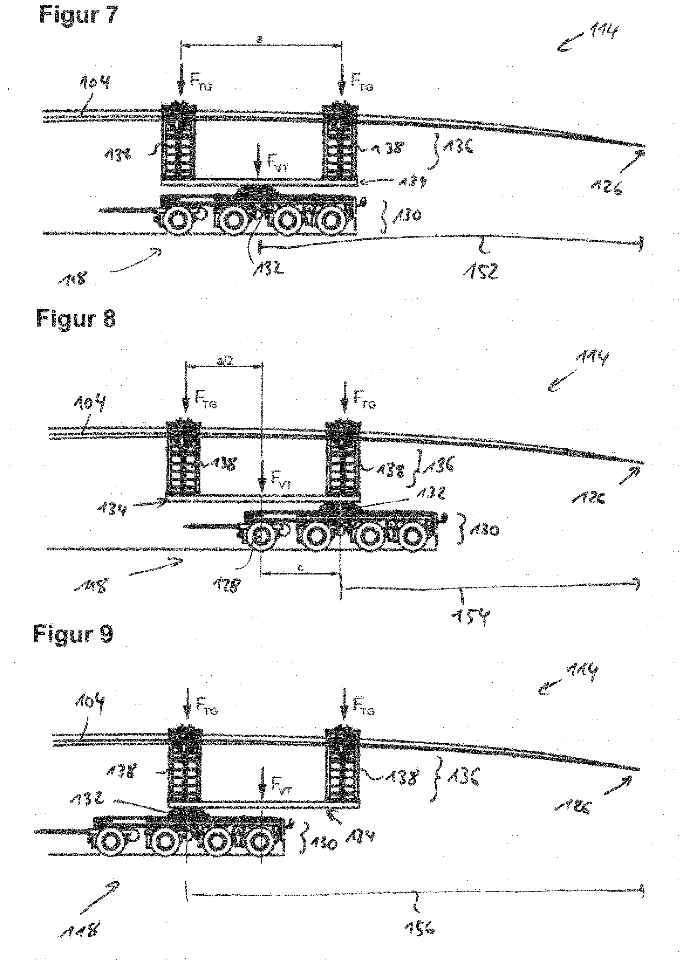

Es sei an dieser Stelle erwähnt, dass die Ausbildung des Trägergestells 136 sowie der Verschiebevorrichtung 134 verschiedene mechanische und konstruktive Ausgestaltungen haben kann. Entscheidend ist, dass in letzter Konsequenz das Trägergestell 136, das heißt die Elemente, die fest mit dem Rotorblatt 104 beim Transport mechanisch verbunden sind, bezüglich des Drehlagers 132 und damit des Fahrwerks 130 verschiebbar sind. Dadurch werden die eingangs genannten Vorteile und Funktionen ermöglicht, wie auch anhand der Figuren 7 bis 9 schematisch dargestellt.

In Figuren 7 bis 9 ist der hintere Endbereich 124 des Transportfahrzeugs 114 gezeigt. Wie in diesen Figuren 7 bis 9 gezeigt wirken auf die Lagergestelle 138, die auch als Tip-Gestelle bezeichnet werden, durch das Rotorblatt 104 Kräfte F_{TG}. Mittig zwischen beiden Lagergestellen 138 wirkt über die Verschiebevorrichtung 132 eine Kraft F_{VT}. Weiterhin ist ein Abstand a zwischen beiden Lagergestellen 138 angegeben.

Figur 7 zeigt eine erste Stellung des Trägergestells 136, die beispielsweise einer Normalfahrt entspricht. In dieser Stellung sind die Lagergestelle 138 symmetrisch um das Lager 132 angeordnet. Ein erster Überhang 152, der sich im Ausführungsbeispiel vom blattspitzenseitigen Ende 126 zum Lager 132 definiert, weist ein Normalmaß auf.

Figur 8 zeigt eine zweite Stellung des Trägergestells 136, die einer ersten Endstellung entspricht. Mittels der Verschiebevorrichtung 134 ist das Trägergestell 136 in Richtung Zugmaschine 116 bis gegen einen Anschlag verschoben. Dadurch ist ein zweiter Überhang 154, der im Vergleich zum ersten Überhang 152 verringert ist, eingestellt. Zudem ist ein Abstand a/2 zwischen dem einem Lagergestell 138 und der vordersten Achse 128 eingestellt, so dass die Kraft F_{VT} auf diese vordere Achse 128 wirkt.

Figur 9 zeigt eine dritte Stellung des Trägergestells 136, die einer zweiten Endstellung entspricht. Mittels der Verschiebevorrichtung 134 ist das Trägergestell 136 in Richtung weg von der Zugmaschine 116 bis gegen einen Anschlag verschoben. Dadurch ist ein dritter Überhang 156, der im Vergleich zum ersten Überhang 152 vergrößert ist, eingestellt.

Die Verschiebevorrichtung 134 weist zudem eine in den Figuren nicht gezeigte Arretiervorrichtung auf, die es erlaubt, die Stellungen der Verschiebeplattform 142 und damit des Trägergestells 136 bezüglich des Lagers 132 zu arretieren. Zudem weist das Nachläuferfahrzeug 118 eine Bremsvorrichtung auf, um ein Rollen dessen zu blockieren. Diese beiden Vorrichtungen sind insbesondere notwendig für das nachfolgend beschriebene Einstellen des Überhangs 152 bis 156.

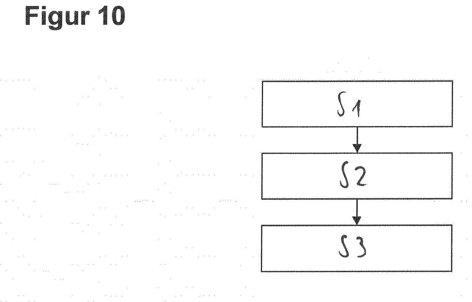

Figur 10 zeigt schematisch ein Ablaufdiagramm für ein Verfahren zum Einstellen eines Überhangs eines Rotorblatts 104, welches betriebsgemäß am Transportfahrzeug 114 für den Transport montiert ist. Mit anderen Worten sind Zugmaschine 116 und Nachläuferfahrzeug 118 über das Rotorblatt 104, das Transportgut, mechanisch gekoppelt.

In einem Schritt S1 wird das Fahrwerk 130 des Nachläuferfahrzeugs 118 blockiert, so dass das Nachläuferfahrzeug 118 nicht aus seiner Position bewegt, insbesondere gerollt, werden kann.

In einem nächsten Schritt S2 wird das Trägergestell 136 derart freigegeben, dass dieses bezüglich des Drehlagers 132 entlang der vorbestimmten Richtung verschiebbar ist. Das Freigeben umfasst im Ausführungsbeispiel das Freigeben eines Verschiebens der Verschiebeplattform 142.

In einem nächsten Schritt S3 wird die Zugmaschine 116 mittels des Antriebs bewegt, so dass durch das blockierte Fahrwerk 130 und die mechanische Kopplung mittels des Windenergieanlagenrotorblatts 104 das Trägergestell 136 entsprechend der Bewegung der Zugmaschine 116 entlang der vorbestimmten Richtung relativ zu dem Drehlager 132 bewegt wird.

Für eine Weiterfahrt der Zugmaschine wird das Trägergestell 136 mittels der Arretiervorrichtung arretiert und das Fahrwerk 139 wird durch die Bremsvorrichtung freigegeben.

### BEZUGSZEICHENLISTE

- 100: Windenergieanlage
- 102: Turm
- 104: Fundament
- 106: Gondel
- 108: Rotor
- 110: Rotorblatt, Windenergieanlagenrotorblatt
- 112: Rotornabe
- 114: Transportfahrzeug
- 116: Zugmaschine
- 118: Nachläuferfahrzeug
- 120: Haltevorrichtung
- 122: blattwurzelseitiges Ende
- 124: Endbereich
- 126: blattspitzenseitiges Ende
- 128: Achse
- 129: Räder
- 130: Fahrwerk
- 132: Dreh-/Wipplager
- 134: Verschiebevorrichtung
- 136: Trägergestell
- 138: Lagergestell
- 139: Längsrichtung
- 140: Überhang
- 142: Verschiebeplattform
- 144: Lagerkomponente
- 145: Längsrahmenelement
- 146: Anbindungspunkt
- 148: Führungselement
- 150: Führungskanal
- 152: erster Überhang
- 154: zweiter Überhang
- 156: dritter Überhang

## Patentansprüche

1. Nachläuferfahrzeug (118) für den Transport eines Windenergieanlagenrotorblatts (104), aufweisend
- ein Fahrwerk (130) mit zumindest zwei Achsen (128) zum Rollen auf einem Untergrund,
- ein Drehlager (132), welches an dem Fahrwerk (130) fest angeordnet ist,
- ein Trägergestell (136) welches ausgebildet ist zum Anbringen an ein Windenergieanlagenrotorblatt (104) und zum Abstützen dessen während des Transports, wobei das Trägergestell (136) mit dem Drehlager (132) gekoppelt ist, so dass das Trägergestell (136) gegenüber dem Fahrwerk (130) verdrehbar ist, **dadurch gekennzeichnet, dass**
- das Trägergestell (136) mittels einer Verschiebevorrichtung (134) mit dem Drehlager (132) gekoppelt ist, die derart ausgebildet ist, dass das Trägergestell (136) relativ zu dem Drehlager (132) verschiebbar ist, dass die Verschiebevorrichtung (134) eine Verschiebeplattform (142) aufweist, die mit dem Trägergestell (136) mechanisch verbunden und die verschiebbar an dem Drehlager (132) angeordnet ist, und dass die Verschiebevorrichtung (134) eine Lagerkomponente (144) aufweist, die fest mit dem Drehlager (132) verbunden ist, wobei die Verschiebeplattform (142) verschiebbar an der Lagerkomponente (144) geführt ist, so dass das Trägergestell (136) relativ zu dem Drehlager (132) entlang einer Rotorblattlängsrichtung des Windenergieanlagenrotorblatts (104) verschiebbar ausgebildet ist.

2. Nachläuferfahrzeug (118) nach Anspruch 1, wobei das Trägergestell (136) verschiebbar an dem Drehlager (132) gelagert ist.

3. Nachläuferfahrzeug (118) nach einem der vorhergehenden Ansprüche, wobei das Trägergestell (136) zwischen zwei definierten Endstellungen relativ zu dem Drehlager (132) verschoben werden kann.

4. Nachläuferfahrzeug (118) nach einem der vorhergehenden Ansprüche, aufweisend eine Arretiervorrichtung, mittels der das Trägergestell (136) relativ zu dem Drehlager (132) wahlweise arretierbar oder freigebbar ist.

5. Nachläuferfahrzeug (118) nach einem der vorhergehenden Ansprüche, aufweisend eine Bremsvorrichtung zum Blockieren des Fahrwerks (130) des Nachläuferfahrzeugs (118).

6. Transportfahrzeug (114) für den Transport eines Windenergieanlagenrotorblatts (104), aufweisend
- eine Zugmaschine (116) mit einem Antrieb, und
- ein Nachläuferfahrzeug (118) nach einem der Ansprüche 1 bis 5.

7. Verfahren zum Einstellen eines Überhangs (152, 154, 156) eines mit einem Transportfahrzeug (11) nach Anspruch 6 transportierten Windenergieanlagenrotorblatts (104), wobei das Windenergieanlagenrotorblatt (104) die Zugmaschine (116) und das Nachläuferfahrzeug (118) mechanisch koppelt, aufweisend die Schritte:
- Blockieren des Fahrwerks (130) des Nachläuferfahrzeugs (118),
- Freigeben des Trägergestells (136) derart, dass dieses bezüglich des Drehlagers (132) entlang der Rotorblattlängsrichtung des Windenergieanlagenrotorblatts (104) verschiebbar ist,
- Bewegen der Zugmaschine (116) mittels des Antriebs, so dass durch das blockierte Fahrwerk (130) und die mechanische Kopplung mittels des Windenergieanlagenrotorblatts (104) das Trägergestell (136) entsprechend der Bewegung der Zugmaschine (116) entlang der Rotorblattlängsrichtung des Windenergieanlagenrotorblatts (104) relativ zu dem Drehlager (132) bewegt wird.

## Claims

1. A trailer vehicle (118) for transporting a wind turbine rotor blade (104), comprising
- a chassis (130) having at least two axles (128) for rolling on an underground,
- a pivot bearing (132) fixedly arranged on the chassis (130),
- a carrier frame (136) designed to be applied to a wind turbine rotor blade (104) and for its support during transport, wherein the carrier frame (136) is coupled to the pivot bearing (132) such that the carrier frame (136) is rotatable relative to the chassis (130),
**characterized in that**
- the carrier frame (136) is coupled to the pivot bearing (132) by means of a displacement device (134), which is designed such that the carrier frame (136) is displaceable relative to the pivot bearing (132),
- the displacement device (134) has a displacement platform (142) mechanically connected to the carrier frame (136) and arranged to be displaceable on the pivot bearing (132), and
- the displacement device (134) has a bearing component (144) fixedly connected to the pivot bearing (132), wherein the displacement platform (142) is guided to be displaceable on the bearing component (144) so that the carrier frame (136) is designed to be displaceable relative to the pivot bearing (132) along a rotor blade longitudinal direction of the wind turbine rotor blade (104).

2. The trailer vehicle (118) according to claim 1, wherein the carrier frame (136) is mounted to be displaceable on the pivot bearing (132).

3. The trailer vehicle (118) according to any one of the preceding claims, wherein the carrier frame (136) can be displaced relative to the pivot bearing (132) between two defined end positions.

4. The trailer vehicle (118) according to any one of the preceding claims, including an arresting device by means of which the carrier frame (136) is optionally arrestable or releasable relative to the pivot bearing (132).

5. The trailer vehicle (118) according to any one of the preceding claims, including a braking device for blocking the chassis (130) of the trailer vehicle (118).

6. A transport vehicle (114) for transporting a wind turbine rotor blade (104), including
- a tractor unit (116) having a drive assembly, and
- a trailer vehicle (118) according to any one of claims 1 to 5.

7. A method for adjusting a projection (152, 154, 156) of a wind turbine rotor blade (104) transported by a transport vehicle (114) according to claim 6, wherein the wind turbine rotor blade (104) mechanically couples the tractor unit (116) and the trailer vehicle (118), including the steps of:
- blocking the chassis (130) of the trailer vehicle (118),
- releasing the carrier frame (136) such that it is displaceable relative to the pivot bearing (132) along the rotor blade longitudinal direction of the wind energy assembly rotor blade (104),
- moving the tractor unit (116) by means of the drive assembly so that, by the blocked chassis (130) and the mechanical coupling by means of the wind turbine rotor blade (104), the carrier frame (136) is moved according to the movement of the tractor unit (116) along the rotor blade longitudinal direction of the wind turbine rotor blade (104) relative to the pivot bearing (132).

## Revendications

1. Véhicule remorque (118) pour le transport d'une pale de rotor d'éolienne (104), présentant
- un châssis (130) comportant au moins deux essieux (128) permettant de rouler sur un sol,
- un palier pivot (132), lequel est disposé de manière fixe au niveau du châssis (130),
- une armature de support (136), laquelle est constituée pour être placée contre une pale de rotor d'éolienne (104) et pour étayer celle-ci pendant le transport, sachant que l'armature de support (136) est couplée au palier pivot (132) de telle sorte que l'armature de support (136) puisse être tournée par rapport au châssis (130),
**caractérisée en ce que**
- l'armature de support (136) est couplée au palier pivot (132) moyennant un dispositif de translation (134) qui est constitué de telle manière que l'armature de support (136) puisse être translatée par rapport au palier pivot (132),
- le dispositif de translation (134) présente une plateforme de translation (142) qui est reliée mécaniquement à l'armature de support (136) et est disposée de manière translatable au niveau du palier pivot (132), et **en ce que**
- le dispositif de translation (134) présente une composante palier (144) qui est reliée de manière fixe au palier pivot (132), sachant que la plateforme de translation (142) est guidée de manière translatable au niveau de la composante palier (144) de telle sorte que l'armature de support (136) soit constituée de manière translatable par rapport au palier pivot (132) le long d'une direction longitudinale de pale de rotor de la pale de rotor d'éolienne (104) .

2. Véhicule remorque (118) selon la revendication 1, sachant que l'armature de support (136) est logée de manière translatable au niveau du palier pivot (132).

3. Véhicule remorque (118) selon l'une des revendications précédentes, sachant que l'armature de support (136) peut être translatée entre deux positions finales définies par rapport au palier pivot (132).

4. Véhicule remorque (118) selon l'une des revendications précédentes, présentant un dispositif d'arrêt moyennant lequel l'armature de support (136) peut être arrêtée ou libérée au choix par rapport au palier pivot (132).

5. Véhicule remorque (118) selon l'une des revendications précédentes, présentant un dispositif de freinage permettant de bloquer le châssis (130) du véhicule remorque (118).

6. Véhicule de transport (114) pour le transport d'une pale de rotor d'éolienne (104), présentant
- un tracteur (116) comportant un entraînement, et
- un véhicule remorque (118) selon l'une des revendications 1 à 5.

7. Procédé de réglage d'un surplomb (152, 154, 156) d'une pale de rotor d'éolienne (104) transportée avec un véhicule de transport (114) selon la revendication 6, sachant que la pale de rotor d'éolienne (104) couple mécaniquement le tracteur (116) et le véhicule remorque (118), présentant les étapes :
- blocage du châssis (130) du véhicule remorque (118),
- libération de l'armature de support (136) de telle manière que celle-ci soit translatable par rapport au palier pivot (132) le long de la direction longitudinale de pale de rotor de la pale de rotor d'éolienne (104),
- déplacement du tracteur (116) moyennant l'entraînement de telle sorte que, du fait du châssis (130) bloqué et du couplage mécanique moyennant la pale de rotor d'éolienne (104), l'armature de support (136) soit déplacée par rapport au palier pivot (132) selon le déplacement du tracteur (116) le long de la direction longitudinale de pale de rotor de la pale de rotor d'éolienne (104).
